# EUROPÄISCHE PATENTSCHRIFT

(11) **EP 0 993 479 B1**
(45) Veröffentlichungstag und Bekanntmachung des Hinweises auf die Patenterteilung: **26.09.2001**
(21) Anmeldenummer: 98935011.1
(22) Anmeldetag: 01.07.1998
(51) Int. Cl.: C08G 18/08, C08G 18/71, C08G 18/10, C08L 75/04

(54) **POLYURETHANHARZ, VERFAHREN ZU SEINER HERSTELLUNG UND SEINE VERWENDUNG IN WÄSSRIGEN ZWEIKOMPONENTEN-KLARLACKEN**
POLYURETHANE RESIN, METHOD FOR THE PRODUCTION AND USE THEREOF IN AN AQUEOUS DUAL COMPONENT CLEAR VARNISH
RESINE POLYURETHANE, PROCEDE PERMETTANT DE LA PRODUIRE ET SON UTILISATION DANS DES VERNIS CLAIRS AQUEUX A DEUX COMPOSANTS

(30) Priorität: 03.07.1997 DE 19728411
(43) Veröffentlichungstag der Anmeldung: 19.04.2000
(73) Patentinhaber: BASF Coatings AG, 48165 Münster (DE)
(72) Erfinder: HINTZE-BRÜNING, Horst, D-48165 Münster (DE); RINK, Heinz-Peter, D-48153 Münster (DE); WEINERT, Peter, D-48167 Münster (DE)
(74) Vertreter: Fitzner, Uwe, Dr.
(86) Internationale Anmeldenummer: EP9804069
(87) Internationale Veröffentlichungsnummer: WO9901491

(56) Entgegenhaltungen:
- DE-A- 4 226 270
- US-A- 3 923 713
- US-A- 4 080 318

## Beschreibung

Gegenstand der vorliegenden Erfindung ist ein Polyurethanharz, das als Additiv für wäßrige Beschichtungsmittel zur Steuerung der Rheologie geeignet ist.

Gegenstand der vorliegenden Anmeldung sind außerdem Verfahren zur Herstellung dieses Polyurethanharzes sowie wäßrige Zweikomponenten-Polyurethan-Beschichtungsmittel, die dieses Polyurethanharz enthalten, die Verwendung dieser Beschichtungsmittel sowie die Verwendung des Polyurethanharzes als Additiv zur Steuerung der Rheologie von Beschichtungsmitteln.

Im Bereich der Kunststofflackierung besteht verstärkt der Wunsch nach wäßrigen Systemen, und zwar sowohl im Bereich der Grundierungen als auch im Decklackbereich. Dabei müssen die eingesetzten Lacke eine Vielzahl unterschiedlicher Anforderungen erfüllen. Insbesondere besteht so im Bereich der Kunststofflackierung die Forderung, daß die resultierenden Beschichtungen ein sogenanntes gutes "appearance" zeigen, also beispielsweise einen hohen Glanz und niedrige Haze-Werte aufweisen. Ferner dürfen beispielsweise in sogenannten Naß-in-Naß-Verfahren zur Herstellung einer Basecoat/Clear-coat-Beschichtung auf den noch nicht gehärteten Basislack applizierte Klarlacke die Basislackschicht nicht anlösen oder sonst wie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes oder Perlglanzpigmente) enthalten, eingesetzt werden.

Ferner sollten die Beschichtungsmittel nach der Applikation, insbesondere beim Einbrennvorgang oder beim Trocknungsvorgang bei Temperaturen im allgemeinen von Raumtemperatur bis ca. 80 °C an senkrechten Flächen, an Kanten und in Sikken, eine möglichst geringe Ablaufneigung (Läuferbildung, Tränenbildung, Sagging) aufweisen. Es ist dabei bekannt, daß diese Ablaufneigung durch Steuerung der Rheologie der Beschichtungsmittel beeinflußt werden kann. Durch Erhöhung der Viskosität der bekannten Lacke ist jedoch nur eine unzureichende Verbesserung der Ablaufneigung zu erzielen.

Nun ist es bekannt, daß Polyharnstoffverbindungen eine ablaufstabilisierende Wirkung aufweisen. Ein gravierender Nachteil bekannter Polyharnstoffe sind jedoch Schleier im eingebrannten Lackfilm, insbesondere dann, wenn die Polyharnstoffe in Klarlacken eingesetzt werden.

Zur Überwindung dieses Problems ist in der DE-A-42 36 901 die Verwendung von acrylierten Polyurethanharzen, die hergestellt werden durch Umsetzung eines hydroxylgruppenhaltigen Acrylatcopolymerisats, einer hydroxyfunktionellen Mikrodispersion, eines Diisocyanates und eines Monoamins, als Additiv zur Steuerung der Rheologie von konventionellen Beschichtungsmitteln vorgeschlagen worden. Die in der DE-A-42 36 901 beschriebenen Polyurethanharze weisen jedoch den Nachteil auf, daß sie mittels eines aufwendigen, mehrere Syntheseschritte umfassenden Verfahrens hergestellt werden müssen und für wäßrige Lacke ungeeignet sind.

Weiterhin sind auch aus der DE-C-31 50 174 hydrophobe, harnstoffgruppenhaltige Polyurethanharze auf Basis eines Polyalkylenoxiddioles mit einem Molekulargewicht von 2.000 bis 20.000 und ihre Verwendung als Verdicker zur Steuerung der Rheologie von wäßrigen Beschichtungsmitteln bekannt. Die in der DE-C-31 50 174 beschriebenen Polyurethanharze weisen aber aufgrund des hohen Ethergruppengehaltes den Nachteil auf, daß die Filme gegenüber Schwitzwasser empfindlich werden. Ferner sind diese dort beschriebenen Verdicker nur in hoher Verdünnung gut handhabbar. Ferner sind diese Verdicker als Filmbildner nicht einsetzbar. Da die Polyethersegmente des Verdickers stabile Wechselwirkungen mit Wasser eingehen, können bei Lagerung über 40 °C Instabilitäten auftreten.

Aus der nicht vorveröffentlichten Deutschen Patentanmeldung P 196 11 646.5 ist ferner ein wäßriges Zweikomponenten-Polyurethan-Beschichtungsmittel bekannt, das zur Beschichtung von Kunststoffen geeignet ist. Die Verwendung von Polyurethanharzen, die mit einem Monoisocyanat modifiziert wurden, als Additiv zur Rheologiesteuerung ist jedoch nicht beschrieben.

Ferner sind aus der nicht vorveröffentlichten Deutschen Patentanmeldung P 196 06 783.9 Polyurethanharze und ihre Verwendung als Additiv für wäßrige Lacke zur Erhöhung der rheologischen Stabilität bekannt. Mit Monoisocyanaten modifizierte Polyurethanharze sind in dieser Schrift jedoch nicht beschrieben.

Der vorliegenden Erfindung liegt daher die Aufgabe zugrunde, Polyurethanharze zur Verfügung zu stellen, die als Additiv insbesondere in wäßrigen Beschichtungsmitteln geeignet sind und die dort zur Steuerung der Viskosität eingesetzt werden können. Diese Polyurethanharze sollten dabei möglichst auch als Bindemittel-komponente fungieren. Vor allem sollten diese Polyurethanharze, besonders bei Verwendung in wäßrigen Zweikomponenten-Polyurethanbeschichtungsmitteln, besonders bevorzugt bei Verwendung in Klarlacken, zu Beschichtungen mit einem guten Appearance (z.B. hoher Glanz, niedrige Haze-Werte) führen. Gleichzeitig sollten die resultierenden Beschichtungsmittel nach Applikation eine nur geringe Läuferneigung aufweisen. Ferner sollten die unter Verwendung dieser Polyurethanharze hergestellten Beschichtungsmittel bei Verwendung als Klarlack zur Herstellung einer Mehrschichtlackierung eine gute Benetzung zum Basislack zeigen. Außerdem sollte - im Falle von Zweikomponenten-Beschichtungsmitteln - die Bindemittel-Komponente (I) des Beschichtungsmittels eine möglichst lange Lagerstabilität aufweisen.

Schließlich besteht im Bereich der Kunststofflackierung noch die Forderung, daß die eingesetzten Beschichtungsmittel bei niedrigen Temperaturen (im allgemeinen < 100°C) aushärtbar sind und auch bei Aushärtung bei diesen niedrigen Temperaturen zu Filmen mit den gewünschten Eigenschaften führen.

Diese Aufgabe wird überraschenderweise durch ein Polyurethanharz (P) gelöst, das erhältlich ist, indem
(A) in einer ersten Reaktionsstufe (A)
   (a) ein oder mehrere Di- und/oder Polyisocyanate,
   (b) ein oder mehrere Verbindungen (b), die mindestens eine die Wasserdispergierbarkeit gewährleistende Gruppe und mehr als 1 gegenüber Isocyanatgruppen reaktive Gruppe aufweisen, und
   (c) ggf. ein oder mehrere Verbindungen mit mindestens 2 und maximal 3 OH-Gruppen
   zu einem Zwischenprodukt (A) mit freien Isocyanatgruppen und mit Urethangruppen umgesetzt werden,
(B) in einer zweiten Reaktionsstufe (B) das in Stufe (A) erhaltene Zwischenprodukt (A) mit (d) einem oder mehreren Monoisocyanaten
   versetzt wird und
(C) anschließend das erhaltene Gemisch (B) mit einem oder mehreren hydroxylgruppenhaltigen Polymeren und/- oder Oligomeren (D) zu dem Polyurethanharz (P) umgesetzt wird, wobei zur Herstellung des Polyurethanharzes weniger als 20 Gew. -%, bezogen auf das Gewicht des Polyurethanharzes (Festkörper), Polyalkylenoxiddiole und/oder Polyalkylenoxidpolyole eingesetzt werden.

Gegenstand der Erfindung sind außerdem Verfahren zur Herstellung dieser Polyurethanharze sowie Beschichtungsmittel, insbesondere wäßrige Zweikomponenten-Polyurethan-Beschichtungsmittel, die dieses Polyurethanharz enthalten, die Verwendung dieser Beschichtungsmittel sowie die Verwendung des Polyurethanharzes als Additiv zur Steuerung der Rheologie.

Es ist überraschend und war nicht vorhersehbar, daß die Polyurethanharze sowohl als Bindemittelkomponente fungieren als auch rheologiesteuernde Eigenschaften aufweisen und die Bildung transparenter Lackfilme mit hoher Homogenität begünstigen. Vorteilhaft ist außerdem, daß die Polyurethanharze insbesondere bei Verwendung in wäßrigen Zweikomponenten-Polyurethan-Beschichtungsmitteln, bevorzugt bei Verwendung in Klarlacken, zu Beschichtungen mit einem guten Appearance (z.B. hoher Glanz, niedrige Haze-Werte) mit gleichzeitig einer nur geringen Läuferneigung führen. Ferner zeigen die unter Verwendung dieser Polyurethanharze hergestellten Beschichtungsmittel bei Verwendung als Klarlack zur Herstellung einer Mehrschichtlackierung eine gute Benetzung zum Basislack. Außerdem weist die Bindemittel-Komponente (I) des Beschichtungsmittels - im Falle von Zweikomponenten-Beschichtungsmitteln - eine lange Lagerstabilität auf. Vorteilhaft ist schließlich auch, daß die eingesetzten Beschichtungsmittel bei niedrigen Temperaturen (im allgemeinen < 100°C) aushärtbar sind und auch bei Aushärtung bei diesen niedrigen Temperaturen zu Filmen mit den gewünschten Eigenschaften führen.

Zur Herstellung des erfindungsgemäßen Polyurethanharzes (P) werden in einer ersten Reaktionsstufe (A)
(a) ein oder mehrere Di- und/oder Polyisocyanate,
(b) ein oder mehrere Verbindungen (b), die mindestens eine die Wasserdispergierbarkeit gewährleistende Gruppe und mehr als 1 gegenüber Isocyanatgruppen reaktive Gruppe aufweisen, und
(c) ggf. ein oder mehrere Verbindungen mit mindestens 2 und maximal 3 OH-Gruppen
zu einem Zwischenprodukt (A) mit freien Isocyanatgruppen und mit Urethangruppen umgesetzt.

Als geeignete multifunktionelle Isocyanate (a) zur Herstellung der Polyurethanharze (P) seien aliphatische, cycloaliphatische und/oder aromatische Polyisocyanate mit mindestens zwei Isocyanatgruppen pro Molekül genannt, wobei bevorzugt Isocyanate eingesetzt werden, deren Urethane Allophanate ausbilden können. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Polyurethanharzes gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphthylendiisocyanat, Diphenylmethandiisocyanat, Isophorondiisocyanat, Isocyanatopropylcyclohexylisocyanat, Cyclobutandiisocyanat Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat und deren Derivate genannt.

Bevorzugt werden Hexamethylendiisocyanat, Isophorondiisocyanat, Isocyanatopropylcyclohexylisocyanat und 4,4-Dicyclohexylmethandiyldiisocyanat eingesetzt.

Polyurethane sind im allgemeinen nicht mit Wasser verträglich, wenn nicht bei ihrer Synthese spezielle Bestandteile eingebaut und/oder besondere Herstellungsschritte vorgenommen werden. So werden zur Herstellung der erfindungsgemäßen Polyurethanharze (P) Verbindungen (b) verwendet, die mehr als eine gegenüber Isocyanatgruppen reaktive Gruppe und mindestens eine Gruppe enthalten, die die Wasserdispergierbarkeit gewährleistet. Geeignete Gruppen dieser Art sind nichtionische Gruppen (z. B. Polyether), zur Anionenbildung befähigte Gruppen, Gemische dieser beiden Gruppen oder zur Kationenbildung befähigte Gruppen, bevorzugt zur Anionenbildung befähigte Gruppen.

Es ist dabei aber ebenfalls wichtig, daß nicht eine zu große Zahl an Ethergruppen in das Polyurethanharz eingebaut wird. Es werden daher zur Herstellung des Polyurethanharzes weniger als 20 Gew.-%, bezogen auf das Gewicht des Polyurethanharzes (Festkörper), Polyalkylenoxiddiole und/oder Polyalkylenoxidpolyole eingesetzt. Bevorzugt werden außerdem Polyalkylenoxiddiole und -polyole mit einem zahlenmittleren Molekulargewicht von weniger als 2.000 eingesetzt. Besonders bevorzugt werden im wesentlichen keine Polyalkylenoxiddiole und Polyalkylenoxidpolyole zur Herstellung der Polyurethanharze (P) eingesetzt.

So kann bevorzugt eine so große Säurezahl in das Polyurethanharz eingebaut werden, daß das neutralisierte Produkt stabil in Wasser zu dispergieren ist. Hierzu dienen Verbindungen, die mehr als eine gegenüber Isocyanatgruppen reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind insbesondere Carboxyl-, Sulfonsäure- und/oder Phosphonsäuregruppen. Vorzugsweise werden Alkansäuren mit zwei Substituenten am alpha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben 2 bis etwa 25, vorzugsweise 3 bis 10 Kohlenstoffatome. Bevorzugt werden Di- und/oder Polyhydroxy carbonsäuren, insbesondere Di- und/oder Polyhydroxyalkansäuren und ganz besonders bevorzugt werden Dimethylolpropansäure und Dimethylolbutansäure eingesetzt. Die Verbindung (b) kann 1 bis 25 Gew.-%, vorzugsweise 1 bis 20 Gew.-%, des gesamten Polyolbestandteiles (d.h. einschließlich der Komponente (D)) im Polyurethanharz (P) ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxyalkansäuren im unneutralisierten Präpolymer ergibt eine Säurezahl von wenigstens 5 mg KOH/g, vorzugsweise wenigstens 10 mg KOH/g. Bei sehr niedrigen Säurezahlen sind im allgemeinen weitere Maßnahmen zur Erzielung der Wasserdispergierbarkeit erforderlich. Die obere Grenze der Säurezahl liegt bei 150 mg KOH/g, vorzugsweise bei 40 mg KOH/g, bezogen auf den Feststoff. Bevorzugt liegt die Säurezahl im Bereich von 20 bis 40 mg KOH/g.

Als Alkoholkomponente (c) sind alle üblicherweise eingesetzten Verbindungen mit mindestens zwei und maximal 3 OH-Gruppen geeignet. Bevorzugt werden als Komponente (c) niedermolekulare Verbindungen eingesetzt, es ist aber auch die Verwendung oligomerer und/oder polymerer Verbindungen, ggf. in Kombination mit niedermolekularen Verbindungen, denkbar. Bevorzugt werden daher als Komponente (c) Verbindungen mit einem zahlenmittleren Molekulargewicht von 60 bis 600, bevorzugt von bis zu 400, und/oder mit einer Hydroxylzahl von 10 bis 1800, bevorzugt 50 bis 1200 mg KOH/g, eingesetzt.

Als Beispiele für geeignete Verbindungen (c) seien Trimethylolethan, Trimethylolpropan, Glycerin, Trishydroxiethylisocyanurat, 1,2,4 Butantriol, Propan- und Hexan-Triole genannt. Die Polyole (c) können allein oder als Gemisch eingesetzt werden. Bevorzugt wird Trimethylolpropan eingesetzt.

Die Herstellung der isocyanat- und urethangruppenhaltigen Zwischenprodukte (A) kann durch Reaktion von den Polyolen (c) und Verbindungen (b) mit überschüssigen Polyisocyanaten (a) bei Temperaturen von bis zu 150 Grad C, bevorzugt 50 bis 130 Grad C, in organischen Lösemitteln, die nicht mit Isocyanaten reagieren können, erfolgen. Als Lösemittel in dieser ersten Verfahrensstufe können daher beispielsweise Ketone, Ether oder Ether mit terminalen Estergruppen, wie z.B. Ethylethoxypropionat, oder N-Methylpyrolidon u.ä. eingesetzt werden.

Zur Herstellung der Zwischenprodukte (A) liegt das Äquivalentverhältnis von NCO-Gruppen der Verbindung (a) zu den OH-Gruppen der Verbindungen (b) und (c) üblicherweise zwischen 4,0:1,0 und > 1,0:1,0, bevorzugt zwischen 3,0:1 und 1,8:1.

In einer zweiten Reaktionsstufe (B) wird das in der ersten Stufe erhaltene isocyanat- und urethangruppenhaltige Zwischenprodukt (A) mit einem oder mehreren Monoisocyanaten (d) zu dem Gemisch (B) vermischt.

Als Monoisocyanat (d) sind alle üblicherweise eingesetzten Monoisocyanate geeignet, wobei aber bevorzugt Monoisocyanate eingesetzt werden, die bei Raumtemperatur nicht leicht flüchtig sind, d.h. die bevorzugt einen Siedepunkt von mehr als 50 °C aufweisen.

Als Beispiele für geeignete Monoisocyanate seien cycloaliphatische Monoisocyanate, wie beispielsweise Cyclohexylisocyanat und Cyclopentylisocyanat, und aliphatische Monoisocyanate, wie beispielsweise Dodecylisocyanat, Isodecylisocyanat, Laurylisocyanat und Stearylisocyanat genannt. Bevorzugt wird Stearylisocyanat eingesetzt.

Die Umsetzung mit dem Monoisocyanat erfolgt üblicherweise bei Temperaturen von bis zu 150 Grad C, bevorzugt 50 bis 130 °C, in organischen Lösemitteln, die nicht mit Isocyanaten reagieren können. Katalysatoren, wie z.B. Dibutylzinndilaurat, Zinkstearat, Zinnoxid u.a. können dabei mitverwendet werden. Als Lösemittel in dieser ersten Verfahrensstufe können beispielsweise wiederum Ketone, Ether oder Ether mit terminalen Estergruppen, wie z.B. Ethylethoxypropionat, oder N-Methylpyrolidon u.ä., eingesetzt werden.

Zur Herstellung des Gemisches (B) liegt das Äquivalentverhältnis von NCO-Gruppen der Monoisocyanate (d) zu den Urethangruppen des Zwischenproduktes (A) bevorzugt zwischen 1 : 1 und 0,5 : 1.

Das Gemisch (B) wird anschließend in einer weiteren Reaktionsstufe (C) mit einem oder mehreren hydroxylgruppenhaltigen Polymeren (D) zu dem Polyurethanharz (P) umgesetzt. Bevorzugt werden dabei hydroxylgruppenhaltige Polymere (D) mit einer OH-Zahl von 100 bis 1800 mgKOH/g, besonders bevorzugt 120 bis 1200 mgKOH/g, ganz besonders bevorzugt 180 bis 800 mgKOH/g und/oder mit einem zahlenmittleren Molekulargewicht von 500 bis 3000, besonders bevorzugt von 750 bis < 2000, und/oder mit einem Verzweigungsgrad von 2 bis 4 eingesetzt. Als Polymer (D) können insbesondere hydroxylgruppenhaltige Polyester, Alkydharze, Polyether, Polyacrylatharze, Polyharnstoffharze, Polyurethanharze und/oder Polycarbonatharze eingesetzt werden.

Um ein Polyurethanharz hoher Flexibilität zu erhalten, sollte als Polymer (D) ein hoher Anteil eines überwiegend linearen Polyols mit einer bevorzugten OH-Zahl von 30 bis 150 mg KOH/g eingesetzt werden. Bis zu 97 Gew.- des gesamten zur Herstellung des Polyurethans (P) eingesetzten Polyols (also Komponenten (b), (c) und (D)) können aus gesättigten und ungesättigten Polyestern und/oder Polyethern mit einem zahlenmittleren Molekulargewicht Mn von 400 bis 5000 Dalton bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden.

Die Mengenverhältnisse der Komponenten (a) bis (d) und (D) können über weite Bereiche und in Abhängigkeit von den Reaktionskomponenten gewählt werden. Die Mengenverhältnisse werden dabei aber so gewählt, daß das Polyurethanharz (P) die gewünschten Kennzahlen aufweist. Bevorzugt weist das Polyurethanharz (P) dabei eine Säurezahl von 20 bis 40 mgKOH/g, bevorzugt von 25 bis 35 mgKOH/g, und/oder eine OH-Zahl von 60 bis 300 mgKOH/g, bevorzugt von 80 bis 200 mgKOH/g, und/oder ein zahlenmittleres Molekulargewicht von 1000 bis 10000, bevorzugt von 1500 bis 5000, auf. Sofern das Polyurethanharz hydrophile Gruppen (z.B. Ethergruppen) aufweist, kann das Polyurethanharz auch eine Säurezahl von weniger als 20 mgKOH/g bis zu 1 mgKOH/g aufweisen.

Als Komponente (D) in Stufe (C) zur Herstellung der erfindungsgemäßen Polyurethanharze (P) wird ganz besonders bevorzugt ein Polykondensationsprodukt aus
(k1) 10 bis 45 Mol-% mindestens eines Diols,
(k2) 5 bis 50 Mol-% mindestens eines Polyols mit mindestens 3 OH-Gruppen pro Molekül,
(k3) 35 bis 47 Mol-% mindestens einer Di- und/oder Polycarbonsäure, ggf. zusammen mit einer Monocarbonsäure, und
(k4) 0 bis 20 Mol-% mindestens eines Monools,
eingesetzt, wobei die Summe der Mol-%-Angaben der Komponenten (k1) bis (k4) jeweils 100 Mol-% beträgt und wobei das Kondensationsprodukt bevorzugt dadurch erhältlich ist, daß die Komponenten (k1) bis (k4) solange einer Kondensationsreaktion unterworfen werden, bis das Reaktionsprodukt (D) eine Säurezahl von 1 bis 10 mgKOH/g aufweist.

Besonders bevorzugt eingesetzte Polymere (D) werden erhalten, wenn die Komponenten (k1), (k2), (k3) und (k4) in solchen Mol-Verhältnissen eingesetzt werden, daß die Summe der OH-Bausteine (k1), (k2) und (k4) insgesamt und die Summe der COOH-Bausteine (k3) in einem Verhältnis von 0,8 : 1 bis 1,6 : 1 eingesetzt werden.

Als Beispiele für Polycarbonsäuren, die als Komponente (k3) eingesetzt werden können, seien aromatische, aliphatische und cycloaliphatische Polycarbonsäuren genannt. Bevorzugt werden als Komponente (k3) aromatische und/oder aliphatische Polycarbonsäuren eingesetzt.

Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphtatischen Polycarbonsäuren können sowohl in ihrer cis- als auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Geeignete Diole (k1) zur Herstellung des Polyesters (D) sind beispielsweise Ethylenglykol, Propandiole, Butandiole, Hexandiole, Hydroxypivalinsäureneopentylglykolester, Neopentylglykol, Diethylenglykol, Cyclohexandiol, Cyclohexandimethanol, Trimethylpentandiol und Ethylbutylpropandiol. Ferner sind auch aliphatische Polyetherdiole, wie lineare oder verzweigte Poly(oxyethylen)glykole, Poly(oxypropylen) glykole und/oder Poly(oxybutylen)glykole und gemischte Polyetherdiole, wie Poly(oxyethylenoxypropylen)glykole geeignet. Die Polyetherdiole haben üblicherweise eine Molmasse Mn von 400 bis 3000.

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität usw.

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure oder Dimethylolbutansäure.

Die Diole können allein oder im Gemisch aus verschiedenen Diolen eingesetzt werden.

Beispiele für als Komponente (k2) geeignete Polyole sind Ditrimethylolpropan, Trimethylolethan, Trimethylolpropan, Glycerin, Pentaerythrit, Homopentaerythrit, Dipentaerythrit, Trishydroxiethylisocyanat, 1,2,4 Butantriol, Propan- und Hexan-Triole, Trihydroxycarbonsäuren, wie Trishydroxymethyl (ethyl) ethansäuren. Die Polyole mit mindestens 3 OH-Gruppen können allein oder als Gemisch eingesetzt werden. Gegebenenfalls können die Triole zusammen mit einwertigen Alkoholen (k4), wie beispielsweise Butanol, Octanol, Laurylalkohol, Cyclohexanol, tert.-Butylcyclohexanol, ethoxylierten bzw. propoxylierten Phenolen eingesetzt werden.

Die Herstellung der Polyester (D) erfolgt nach den bekannten Methoden der Veresterung, wie dies beispielsweise in der DE-A-40 24 204, Seite 4, Zeilen 50 bis 65, beschrieben ist.

Die Umsetzung erfolgt dabei üblicherweise bei Temperaturen zwischen 180 und 280 Grad C, gegebenenfalls in Gegenwart eines geeigneten Veresterungskatalysators, wie z.B. Lithiumoctoat, Dibutylzinnoxid, Dibutylzinndilaurat, para-Toluolsulfonsäure und ähnlichen.

Üblicherweise wird die Herstellung der Polyester (D) in Gegenwart geringer Mengen eines geeigneten Lösunasmittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan, eingesetzt. Daneben ist es aber auch möglich, die Polyester lösemittelfrei (Umsetzung in Masse) herzustellen.

Die Kondensationsreaktion wird vorzugsweise bis zu einem Umsatz durchgeführt, daß das Reaktionsgemisch eine Säurezahl von etwa 1 bis 10, vorzugsweise 1 bis 5, aufweist.

Der erhaltene Polyester (D) wird vor der weiteren Umsetzung mit dem Gemisch (B) mit einem Lösemittel, das vorteilhafterweise nicht in die Reaktion eingreift, auf einen Festkörpergehalt von 50 bis 90 % angelöst. Als Lösemittel eignen sich u.a. Glykolether wie Glykolethylendimethylether, Glykoletherester, wie Ethylglykolacetat, Butylglykolacetat, 3-Metoxy-n-Butylacetat, Butyldiglykolacetat, Methoxypropylacetat, Ester wie Butylacetat, Isobutylacetat, Amylacetat, Ketone wie Methylethylketon, Methylisobutylketon, Diisobutylketon, Cyclohexanon und Isophoron. Darüber hinaus können auch aromatische Kohlenwasserstoffe, wie Xylol und aliphatische Kohlenwasserstoffe eingesetzt werden.

Im Reaktionsschritt (C) wird dann der Polyester (D) bzw. die anderen Polymeren (D) in an sich bekannter Weise mit dem isocyanatgruppenhaltigen Gemisch (B) umgesetzt, d.h. urethanisiert. Die Urethanisierungsreaktion wird vorzugsweise bis zu einem hohen Umsatz durchgeführt, vorzugsweise liegt der Isocyanatgehalt des erhaltenen Reaktionsproduktes unter 0,5, insbesondere unter 0,1 %.

Das so erhaltene Polyurethan (P) kann in Form der organischen Lösung oder aber auch als wäßrige Dispersion verwendet werden. Zur Herstellung der wäßrigen Dispersion wird im Anschluß an die Reaktion (C) das Reaktionsgemisch mit einer Base neutralisiert. Zur Neutralisierung können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin, eingesetzt werden. Für die Neutralisation werden leicht flüchtige Amine bevorzugt. Das so erhaltene Reaktionsprodukt kann nach Abschluß der Reaktion in an sich bekannter Weise aufgearbeitet und konfektioniert werden.

Vorzugsweise wird das Reaktionsgemisch nach Beendigung der Reaktion zunächst mit Wasser verdünnt und das organische Lösungsmittel unter Vakuum entfernt. Der Festkörpergehalt des Gemisches kann mit Wasser eingestellt werden. Vorzugsweise wird auf einen Festkörpergehalt von 35 % bis 65 % eingestellt. Der pH-Wert einer solchen erhaltenen Dispersion beträgt zwischen 6,4 und 7,5.

Das erhaltene erfindungsgemäße Polyurethanharz (P) eignet sich hervorragend gleichzeitig als Bindemittel und als Additiv zur Steuerung der Rheologie für Beschichtungsmittel, insbesondere als Additiv für wäßrige Beschichtungsmittel, wie 1-K-Wasserlacke, 2-K-Wasserlacke und physikalisch trocknende Wasserlacke. Ganz besonders bevorzugt wird das erfindungsgemäße Polyurethanharz als Additiv für wäßrige Polyurethan-Beschichtungsmittel (1-K, 2-K und physikalisch trocknend) eingesetzt. Bevorzugt wird das Polyurethanharz als Additiv für Klarlacke und Decklacke, insbesondere für die Beschichtung von Kunststoffen, eingesetzt.

Das erfindungsgemäße Polyurethanharz (P) wird ganz besonders bevorzugt in wäßrigen Zweikomponenten-Polyurethan-Beschichtungsmitteln eingesetzt, die eine Komponente (I) und eine Komponente (II) enthalten und bei denen die Komponente (I)
(I-1) ein oder mehrere erfindungsgemäße Polyurethanharze (P),
(I-2) ein oder mehrere wasserlösliche oder wasserdispergierbare, Hydroxylgruppen und Säuregruppen, die in die entsprechenden Säureaniongruppen überführbar sind, enthaltende Acrylatcopolymerisate und/oder acrylierte Polyester und/oder acrylierte Polyurethane mit einer OH-Zahl von 40 bis 200 mg KOH/g und einer Säurezahl von 5 bis 150 mg KOH/g und
(I-3) ggf. ein oder mehrere weitere Polymere
und die Komponente (II) eine Polyisocyanatkomponente als Vernetzungsmittel enthält, wobei die Komponenten (I-1) bis (I-3) und das Vernetzungsmittel in solchen Mengen eingesetzt werden, daß das Äquivalentverhältnis von Hydroxylgruppen der Komponenten (I-1) bis (I-3) zu den Isocyanatgruppen des Vernetzungsmittels zwischen 1 : 2 und 2 : 1, bevorzugt zwischen 1 : 1, 2 und 1 : 1,5, liegt.

Derartige wäßrige Zweikomponenten-Polyurethan-Beschichtungsmittel sind beispielsweise in der nicht vorveröffentlichten Deutschen Patentanmeldung P 196 11 646.5 beschrieben.

Als Hydroxylgruppen und Säuregruppen enthaltendes Acrylatcopolymerisat (I-2) sind alle Acrylatcopolymerisate mit OH-Zahlen von 40 bis 200 mg KOH/g, Säurezahlen von 5 bis 150 mg KOH/g und bevorzugt mit zahlenmittleren Molekulargewichten von 1.000 bis 30.000, besonders bevorzugt von 1.000 bis 15.000, geeignet.

Bevorzugt werden als Komponente (I-2) Acrylatcopolymerisate eingesetzt, die erhältlich sind durch Polymerisation in einem organischen Lösemittel oder einem Lösemittelgemisch und in Gegenwart mindestens eines Polymerisationsinitiators von
a1) einem von (a2) , (a3), (a4), (a5) und (a6) verschiedenen, mit (a2), (a3), (a4), (a5) und (a6) copolymerisierbaren, im wesentlichen säuregruppenfreien (Meth)-acrylsäureester oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,
a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und
a4) gegebenenfalls einem oder mehreren Vinylestern von in alpha-Stellung verzweigten Monocarbonsäuren mit 5 bis 18 C-Atomen je Molekül und/oder
a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz die gewünschte OH-Zahl, Säurezahl und das gewünschte Molekulargewicht aufweist.

Zur Herstellung der erfindungsgemäß eingesetzten Polyacrylatharze kann als Komponente (a1) jeder mit (a2), (a3), (a4), (a5) und (a6) copolymerisierbare, im wesentlichen säuregruppenfreie Ester der (Meth)acrylsäure oder dessen ethoxylierte oder propoxylierte Derivate oder ein Gemisch aus solchen Monomeren eingesetzt werden.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind, oder ein Gemisch aus solchen Monomeren eingesetzt werden. Als Beispiele werden Hydroxyalkylester der Acrylsäure, Methacrylsäure oder einer anderen alpha,beta-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern, wie z.B. epsilon-Caprolacton und diesen Hydroxyalkylestern, oder Mischungen aus diesen Hydroxyalkylestern bzw. epsilon-Caprolacton-modifizierten Hydroxyalkylestern eingesetzt. Ferner können als Komponente (a2) auch olefinisch ungesättigte Polyole und/oder Trimethylolpropanmonoallylether eingesetzt werden.

Als Komponente (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren eingesetzt werden. Als Komponente (a3) werden besonders bevorzugt Acrylsäure und/oder Methacrylsäure eingesetzt. Weiterhin können beispielsweise ethylenisch ungesättigte Sulfon- oder Phosphonsäuren, bzw. deren Teilester, als Komponente (a3) eingesetzt werden.

Als Komponente (a4) werden ein oder mehrere Vinylester von in alpha-Stellung verzweigten Monocarbonsäuren mit 5 bis 18 C-Atomen im Molekül eingesetzt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Komponente (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen.

Als Komponente (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren eingesetzt werden. Als Komponente (a6) werden vorzugsweise vinylaromatische Kohlenwasserstoffe, wie Styrol, alpha-Alkylstyrole und Vinyltoluol, eingesetzt.

Als Komponente (a6) können in Kombination mit anderen als Komponente (a6) geeignet genannten Monomeren auch Polysiloxanmakromonomere eingesetzt werden. So sind z.B. Polysiloxanmakromonomere geeignet, die ein zahlenmittleres Molekulargewicht Mn von 1.000 bis 40.000 Dalton, bevorzugt von 2.000 bis 10.000 Dalton, und im Mittel 0,5 bis 2,5, bevorzugt 0,5 bis 1,5, ethylenisch ungesättigte Doppelbindungen pro Molekül aufweisen. Geeignet sind z.B. die in der DE-A 38 07 571 auf den Seiten 5 bis 7, die in der DE-A 37 06 095 in den Spalten 3 bis 7, die in der EP-B 358 153 auf den Seiten 3 bis 6 und die in der US-A 4,754,014 in den Spalten 5 bis 9 beschriebenen Polysiloxanmakromonomere.

Die Einsatzmenge des oder der Polysiloxanmakromonomeren (a6) zur Modifizierung der Acrylatcopolymerisate beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats eingesetzten Monomeren.

Besonders bevorzugt eingesetzte Acrylatharze werden erhalten durch Polymerisation von
(a1) 20 bis 60 Gew.-%, bevorzugt 30 bis 50 Gew.-%, der Komponente (a1),
(a2) 10 bis 40 Gew.-%, bevorzugt 15 bis 35 Gew.-%, der Komponente (a2),
(a3) 1 bis 15 Gew.-%, bevorzugt 2 bis 8 Gew.-%, der Komponente (a3),
(a4)0 bis 25 Gew.-%, bevorzugt 5 bis 15 Gew.-%, der Komponente (a4),
(a5) 0 bis 25 Gew.-%, bevorzugt 5 bis 15 Gew.-%, der Komponente (a5) und
(a6) 5 bis 30 Gew.-%, bevorzugt 10 bis 20 Gew.-%, der Komponente (a6),
wobei die Summe der Gewichtsanteile der Komponenten (a1) bis (a6) jeweils 100 Gew.-% beträgt.

Die Herstellung der erfindungsgemäß eingesetzten Polyacrylatharze (I-2) erfolgt in einem organischen Lösemittel oder Lösemittelgemisch und in Gegenwart mindestens eines Polymerisationsinitiators.

Es ist dabei auch möglich, die Polyacrylatharze zunächst in einem Lösemittel, das nicht wasserverdünnbar ist, herzustellen und dieses Lösemittel nach der Polymerisation gegebenenfalls teilweise durch wasserverdünnbares Lösemittel zu ersetzen.

Die Initiatoren werden bevorzugt in einer Menge von 2 bis 25 Gew.-%, besonders bevorzugt von 4 bis 10 Gew.-, bezogen auf das Gesamtgewicht der Monomeren, eingesetzt. Die Polymerisation wird zweckmäßigerweise bei einer Temperatur von 80 bis 160 Grad C, vorzugsweise 110 bis 160 Grad C, durchgeführt.

Bevorzugt wird das Polyacrylatharz nach einem Zweistufenverfahren hergestellt, da so die resultierenden wäßrigen Beschichtungsmittel eine bessere Verarbeitbarkeit aufweisen. Bevorzugt werden daher Polyacrylatharze eingesetzt, die erhältlich sind, indem
1. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,
2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und
3. nach Beendigung der Polymerisation das erhaltene Polyacrylatharz gegebenenfalls zumindest teilweise neutralisiert wird, d.h. die Säuregruppen in die entsprechende Säureaniongruppen überführt werden.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten (a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie gegebenenfalls Teilen der Komponenten (a1) und (a6) vorgelegt.

Bevorzugt ist außerdem die Herstellung der Polyacrylatharze durch ein Zweistufenverfahren, bei dem die Stufe (I) 1 bis 8 Stunden, vorzugsweise 1,5 bis 4 Stunden, dauert und die Zugabe der Mischung aus (a3) und dem gegebenenfalls vorhandenen Rest der Komponenten (a1), (a2), (a4), (a5) und (a6) innerhalb von 20 bis 120 Minuten, vorzugsweise innerhalb von 30 bis 90 Minuten, erfolgt. Nach Beendigung der Zugabe der Mischung aus (a3) und dem gegebenenfalls vorhandenen Rest der Komponenten (a1), (a2) , (a4), (a5) und (a6) wird so lange weiter polymerisiert, bis alle eingesetzten Monomeren im wesentlichen vollständig umgesetzt worden sind.

Die Menge und Zugabegeschwindigkeit des Initiators wird vorzugsweise so gewählt, daß ein Polyacrylatharz mit dem gewünschten zahlenmittleren Molekulargewicht erhalten wird. Es ist bevorzugt, daß mit dem Initiatorzulauf einige Zeit, im allgemeinen ca. 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-, bezogen auf das Gewicht der Reaktionsmischung, unumgesetzt zurückbleiben kann.

Bevorzugt werden die Monomeren zur Herstellung der Polyacrylatharze bei einem nicht allzu hohen Polymerisationsfestkörper, bevorzugt bei einem Polymerisationsfestkörper von 80 bis 50 Gew.-%, polymerisiert und anschließend die Lösemittel teilweise destillativ entfernt, so daß die entstehenden Polyacrylatharzlösungen einen Festkörpergehalt von bevorzugt 80 bis 60 Gew.-% aufweisen.

Als Komponente (I-2) geeignet sind ferner acrylierte Polyester mit einer OH-Zahl von 40 bis 200 mgKOH/g, besonders bevorzugt von 60 bis 160 mgKOH/g, und einer Säurezahl von 5 bis 150 mgKOH/g, bevorzugt von 15 bis 75 mgKOH/g und besonders bevorzugt von 20 bis 50 mg-KOH/g. Bevorzugt weisen die acrylierten Polyester zahlenmittlere Molekulargewichte Mn zwischen 1.000 und 50.000 Dalton, bevorzugt zwischen 1.000 und 15.000 Dalton, jeweils gemessen gegen Polystyrolstandard, auf.

Die als Komponente (I-2) eingesetzten acrylierten Polyester sind bekannt. Geeignete acrylierte Polyester sind mit Hilfe verschiedener, dem Fachmann bekannter Verfahren, beispielsweise über den Einbau von Trimethylolpropan-monoallylether oder Maleinsäureanhydrid oder anderer reaktiver, mit Styrol und/oder (Meth)Acrylaten polymerisierbarer Anhydride und anschließender Acrylierung (organisch oder wäßrig), herstellbar.

Als Komponente (I-2) geeignet sind ferner acrylierte Polyurethane mit einer OH-Zahl von 40 bis 200 mgKOH/g, besonders bevorzugt von 60 bis 160 mgKOH/g, und einer Säurezahl von 5 bis 150 mgKOH/g, bevorzugt von 15 bis 75 mgKOH/g und besonders bevorzugt von 20 bis 50 mg-KOH/g. Bevorzugt weisen die acrylierten Polyurethane zahlenmittlere Molekulargewichte Mn zwischen 1.000 und 50.000 Dalton, bevorzugt zwischen 1.000 und 15.000 Dalton, jeweils gemessen gegen Polystyrolstandard, auf.

Die als Komponente (I-2) eingesetzten acrylierten Polyurethane sind ebenfalls bekannt. Geeignete acrylierte Polyurethane sind beispielsweise in der DE-A-41 22 265, Seite 2, Zeile 15, bis Seite 5, Zeile 44; der DE-A-40 10 176, Seite 2, Zeile 41, bis Seite 6, Zeile 64; der EP-A-308 115, Seite 2, Zeile 29, bis Seite 5, Zeile 21; der EP-A-510 572, Seite 3, Zeile 21, bis Seite 5, Zeile 42, und der US-A-4,496,708, Spalte 4, Zeile 5, bis Spalte 12, Zeile 46, beschrieben.

Als Komponente (I-3) zur Herstellung der erfindungsgemäßen Beschichtungsmittel sind beispielsweise alle wasserlöslichen oder wasserdispergierbaren, Hydroxylgruppen und Säuregruppen, die in die entsprechenden Säureaniongruppen überführbar sind, enthaltenden Polyesterharze, bevorzugt solche mit einer OH-Zahl von 30 bis 250 mgKOH/g, besonders bevorzugt von 60 bis 200 mgKOH/g, und einer Säurezahl von 5 bis 150 mgKOH/g, besonders bevorzugt von 15 bis 75 mgKOH/g und ganz besonders bevorzugt von 20 bis 50 mgKOH/g, geeignet. Bevorzugt weisen diese Polyesterharze zahlenmittlere Molekulargewichte Mn zwischen 500 und 30.000 Dalton, besonders bevorzugt zwischen 1000 und 10 . 000 Dalton und ganz besonders bevorzugt zwischen 1000 und 5.000 Dalton, jeweils gemessen gegen Polystyrolstandard, auf. Bevorzugt werden verzweigte Polyester eingesetzt.

Bevorzugt werden Polyester eingesetzt, die erhältlich sind durch Umsetzung von
p1) Di- und/oder Polycarbonsäuren oder deren veresterungsfähigen Derivaten, gegebenenfalls zusammen mit Monocarbonsäuren,
p2) Diolen,
p3) Polyofen, gegebenenfalls zusammen mit Monoolen, und
p4) gegebenenfalls weiteren modifizierenden Komponenten.

Besonders bevorzugt werden dabei Polyester eingesetzt, die ohne Verwendung von Monoolen und Monocarbonsäuren hergestellt worden sind. Ebenfalls besonders bevorzugt sind die Polyester frei von ungesättigten Fettsäuren.

Bezüglich der zur Herstellung der Polyester geeigneten Verbindungen (p1) bis (p3) sei auf die Beschreibung der Polymeren (D) verwiesen. Als Komponente (p4) zur Herstellung der Polyester geeignet sind insbesondere Verbindungen, die eine gegenüber den funktionellen Gruppen des Polyesters reaktive Gruppe aufweisen. Als modifizierende Komponente (p4) können z.B. Diepoxidverbindungen, gegebenenfalls auch Monoepoxidverbindungen verwendet werden. Geeignete Komponenten (p4) sind beispielsweise in der DE-A-40 24 204 auf Seite 4, Zeilen 4 bis 9, beschrieben.

Als Komponente (p4) zur Herstellung der Polyester geeignet sind auch Verbindungen, die außer einer gegenüber den funktionellen Gruppen des Polyesters reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Besonders bevorzugt werden Polyester eingesetzt, die nach einem zweistufigen Verfahren hergestellt worden sind, indem zunächst ein hydroxylgruppenhaltiger Polyester mit einer OH-Zahl von 100 bis 400 mgKOH/g, bevorzugt von 150 bis 350 mgKOH/g, einer Säurezahl von weniger als 10 mgKOH/g und einem zahlenmittleren Molekulargewicht Mn von 500 bis 2000 Dalton hergestellt wird, der dann in einer zweiten Stufe mit Carbonsäureanhydriden zu dem gewünschten Polyester umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride geeignet.

Neben dieser Umsetzung mit Carbonsäureanhydriden können die Säuregruppen ferner auch durch Verwendung von Dimethylolpropionsäure u.ä. in den Polyester eingeführt werden.

Die Komponente (I) des Beschichtungsmittels kann als weiteren Bestandteil (I-B) alle lacküblichen Pigmente in Anteilen von 0 bis 60 Gew. -%, bezogen auf Komponente I, enthalten. Die Pigmente können aus anorganischen oder organischen Verbindungen bestehen und können effekt- und/oder farbgebend sein.

Als weiteren Bestandteil (I-C) kann die Komponente (I) bzw. auch das Bindemittel mindestens ein organisches, partiell oder vollständig wasserlösliches Lösemittel enthalten. Solche Lösemittel können auch an der Reaktion mit der vernetzenden Komponente (II) teilnehmen und somit als Reaktivverdünner wirken.

Die Lösemittel (I-C) können weiterhin teilweise oder vollständig aus niedermolekularen oligomeren Verbindungen bestehen, die gegenüber der vernetzenden Komponente (II) reaktiv oder auch nicht reaktiv sein können. Die Lösemittel (I-C) werden üblicherweise in einer Menge von 0 bis 20 Gew.-%, bevorzugt von weniger als 15 Gew.-%, bezogen auf das Gesamtgewicht der Komponente (I), eingesetzt.

Als Bestandteil (I-D) enthält die Komponente (I) üblicherweise mindestens ein Neutralisationsmittel. Besonders bevorzugt wird als Neutralisationsmittel Dimethylethanolamin eingesetzt.

Die insgesamt in dem erfindungsgemäßen Beschichtungsmittel eingesetzte Menge an Neutralisationsmittel wird so gewählt, daß 1 bis 100 Äquivalente, bevorzugt 50 bis 90 Äquivalente der Säuregruppen des Bindemittels (I-A) neutralisiert werden.

Als Bestandteil (I-E) kann die Komponente (I) ggf. mindestens ein weiteres rheologiesteuerndes Additiv enthalten. Als Beispiele für rheologiesteuernde Additive werden genannt: vernetzte polymere Mikroteilchen, anorganische Schichtsilikate sowie synthetische Polymere mit ionischen und/oder assoziativ wirkenden Gruppen oder auch hydrophob modifizierte ethoxylierte Urethane oder Polyacrylate. Bevorzugt enthält die Komponente (I) 0 bis 2 Gew.-% dieser weiteren rheologiesteuernden Additive, bezogen auf das Gesamtgewicht der Komponente (I).

Die Komponente (I) kann außerdem ggf. noch mindestens ein weiteres übliches Lackadditiv enthalten. Beispiele für derartige Additive sind Entschaumer, Dispergierhilfsmittel, Emulgatoren, und Verlaufshilfsmittel.

Schließlich enthält die Komponente (1) noch Wasser.

Die Lackkomponente (II) enthält als Vernetzungsmittel mindestens ein gegebenfalls in einem oder mehreren organischen, gegebenenfalls wasserverdünnbaren Lösemitteln gelöstes oder dispergiertes, vorzugsweise nichtblockiertes Di- und/oder Polyisocyanat (F1).

Bei der Polyisocyanatkomponente (F1) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der Polyurethanharze (P) genannten Isocyanate (a) und/oder isocyanatgruppenhaltige Polyurethanpräpolymere, die durch Reaktion von Polyolen mit einem Überschuß an Polyisocyanaten hergestellt werden können und die bevorzugt niederviskos sind.

Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicyclohexylmethan-4, 4' -diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanat-komponente (F1) kann im übrigen auch aus beliebigen Gemischen der beispielhaft genannten Polyisocyanate bestehen.

Die Polyisocyanatkomponente (F1) wird in den erfindungsgemäßen Beschichtungsmitteln vorteilhafterweise in einer solchen Menge eingesetzt, daß das Verhältnis der Hydroxylgruppen des Bindemittels (A) zu den Isocyanatgruppen des Vernetzers (F1) zwischen 1 : 2 und 2 : 1, besonders bevorzugt zwischen 1 : 1, und 1 : 1,5, liegt.

Die Herstellung der beiden Komponenten (I) und (II) des erfindungsgemäßen Beschichtungsmittels erfolgt nach den üblichen Methoden aus den einzelnen Bestandteilen unter Rühren. Die Herstellung des Beschichtungsmittel aus diesen beiden Komponenten (I) und (II) erfolgt ebenfalls mittels Rühren bzw. Dispergieren unter Verwendung der üblicherweise eingesetzten Vorrichtungen, beispielsweise mittels Dissolver o.ä. oder mittels ebenfalls üblicherweise eingesetzter 2-Komponenten-Dosier- und -mischanlagen oder mittels des in der DE-A-195 10 651, Seite 2, Zeile 62, bis Seite 4, Zeile 5, beschriebenen Verfahrens zur Herstellung wäßriger 2-K-Polyurethanlacke.

Die unter Verwendung der erfindungsgemäßen Polyurethanharzes (P) hergestellten wäßrigen Lacke enthalten im applikationsfertigen Zustand in der Regel 5 bis 14 Gew.-% des Polyurethanharzes (P), 25 bis 75, vorzugsweise 35 bis 70 Gew.-% Wasser, 0 bis 50, vorzugsweise 0 bis 20 Gew.-% organische Lösemittel, 6 bis 70 und vorzugsweise 15 bis 60 Gew.-% Bindemittel (I-1) bis (I-3), vorzugsweise 0 bis 25 Gew.-% Pigmente und/oder Füllstoffe und 0 bis 10 Gew.-% sonstige Zusätze, wie z.B. Katalysatoren, Verdickungsmittel, Verlaufsmittel usw., wobei die Gewichtsprozentangaben auf die Gesamtrezeptur der Lacke im applikationsfertigen Zustand (d.h. z.B. bei Spritzviskosität) und auf den Festkörpergehalt der Bindemittel, Vernetzer und des Polyurethanharzes (P) bezogen sind.

Mit erfindungsgemäßen wäßrigen Lacken können grundierte oder nicht grundierte Kunststoffe wie z. B. ABS, AMMA, ASA, CA, CAB, EP, UF, CF, MF, MPF, PF, PAN, PA, PC, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnun-gen nach DIN 7728T1) lackiert werden. Die zu lackierenden Kunststoffe können selbstverständlich auch Polymerblends, modifizierte Kunststoffe oder faserverstärkte Kunststoffe sein. Bevorzugt werden die erfindungsgemäßen Beschichtungsmittel zur Beschichtung von PPE/PA-Blends, Polycarbonat-Blends (z.B. PC/ASA, PC/PBT) und Polypropylen-Blends eingesetzt. Insbesondere kommen die erfindungsgemäßen Beschichtungsmittel für die üblicherweise im Fahrzeugbau, insbesondere Kraftfahrzeugbau, eingesetzten Kunststoffe zum Einsatz.

Im Falle von nichtfunktionalisierten und/oder unpolaren Substratoberflächen müssen diese vor der Beschichtung einer Vorbehandlung, wie Plasma oder Beflammen, unterzogen werden.

Als Grundierung kommen dabei alle üblichen Grundierungen, und zwar sowohl konventionelle als auch wäßrige Grundierungen in Betracht. Selbstverständlich können auch strahlenhärtbare sowie strahlenhärtbare wäßrige Grundierungen eingesetzt werden.

Die erfindungsgemäßen Beschichtungsmittel werden zur Herstellung einer Ein- oder Mehrschichtlackierung und bevorzugt als Klarlacke oder als Decklacke, insbesondere als Klarlack einer nach dem naß-in-naß-Verfahren hergestellten Mehrschichtlackierung, eingesetzt. Selbstverständlich können die Kunststoffe oder die anderen Substrate auch direkt mit dem Klarlack oder dem Decklack beschichtet werden.

Schließlich können die Beschichtungsmittel auch auf andere Substrate, wie beispielsweise Metall, Holz oder Papier oder mineralische Untergründe, appliziert werden. Außerdem können sie auch für Beschichtungen von Containern und Emballagen o.ä. eingesetzt werden. Die Applikation erfolgt mit Hilfe üblicher Methoden, beispielsweise Spritzen, Rakeln, Tauchen, Streichen oder mittels des Coil-Coating-Verfahrens.

Die erfindungsgemäßen Beschichtungsmittel werden üblicherweise bei Temperaturen von unter 120 Grad C, bevorzugt bei Temperaturen von maximal 100 Grad C und ganz besonders bevorzugt von maximal 80 °C gehärtet. In speziellen Anwendungsformen der erfindungsgemäßen Beschichtungsmittel können auch höhere Härtungstemperaturen angewendet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden bevorzugt aber im Bereich der Reparaturlackierung und ganz besonders bevorzugt bei der Lackierung von Kunststoffteilen eingesetzt.

Ein weiterer Gegenstand der vorliegenden Erfindung ist schließlich die Verwendung des voranstehend beschriebenen Polyurethanharzes (P) als Additiv für Beschichtungsmittel zur Steuerung der Rheologie sowie die Verwendung der resultierenden Beschichtungsmittel.

Nachfolgend wird die Erfindung anhand von Ausführungsbeispielen näher erläutert. Dabei bedeuten alle Teile Gewichtsteile, sofern nicht ausdrücklich etwas anderes angegeben wird.

### 1. Herstellung einer Dispersion eines Polyurethanharzes (P1)

### 1.1. Herstellung eines hydroxylgruppenhaltigen Polyesters (D1)

Für 1 kg Polyester wurden 128,9 g Neopentylglykol, 318,9 g Hydroxypivalinsäureneopentylglykolester, 166.0 g Trimethylolpropan, 205,5 g Isophthalsäure, 40 g Xylol und 254,3 g Hexahydrophthalsäureanhydrid in einer für Polykondensationreaktionen geeigneten Stahlapparatur eingewogen und kontinuierlich aufgeheizt und das Kondenswasser kontinuierlich entfernt. Bei einer Säurezahl des Produktes von 3 mgKOH/g wurde die Reaktion beendet und das Gemisch auf 100 °C abgekühlt und mit Methylethylketon (MEK) auf 80 % Festkörper angelöst (Viskosität 50 %ig in MEK 0.2 dPa.s). Das so erhaltene Kondensationsprodukt wies eine OH-Zahl von 202 mgKOH/g und eine Säurezahl von 3,5 mgKOH/g auf, jeweils bezogen auf Festharz.

### 1.2. Herstellung eines Polyurethanharzes (P)

In einem für Polyadditionsreaktionen geeigneten Stahlreaktor wurden 444,4 g Isophorondiisocyanat, 133,9 g Dimethylolpropionsäure und 568,0 g Methylethylketon eingewogen und auf 80°C aufgeheizt. Bei einem konstanten Isocyanatgehalt von 7,4 %, bezogen auf die eingesetzte Mischung, kühlte man auf 50°C ab und gab 294,7 g Stearylisocyanat hinzu und heizte wieder auf 82°C auf. Es wurde so lange bei dieser Temperatur weiter erhitzt, bis ein konstanter NCO-Wert erzielt wurde. Anschließend gab man nach Abkühlen auf 50°C 2110 g der obenbeschriebenen Polyesterlösung (D1) zu. Anschließend wurde auf 80°C aufgeheizt. Bei einem Isocyanatgehalt < 0.1% und einer Viskosität von 3,6 dPas (10 : 3 in N-Methylpyrrolidon) wurde mit 71,2 g N,N-Dimethylethanolamin neutralisiert. Danach wurde mit Wasser verdünnt und das organische Lösemittel unter Vakuum entfernt. Abschließend stellte man mit deionisiertem Wasser einen Festkörper von 49,2% ein. Der pH-Wert der Dispersion betrug 6,8. Die Dispersion war stippenfrei, homogen und mindestens 4 Wochen bei 50°C lagerstabil. Der DMEA-Gehalt betrug 13 %, der Lösemittelgehalt 0 %. Das Polyurethanharz wies eine OH-Zahl von 99 mgKOH/g, eine Säurezahl von 23,4 mgKOH/g und ein zahlenmittleres Molekulargewicht von 1934 (gewichtsmittleres Molekulargewicht 5566), gemessen gegen Polystyrolstandard und bezogen auf Festharz, auf.

### 2. Herstellung einer Lösung des Polyurethanharzes (P1)

Es wurde zunächst wie bei der Herstellung der Polyurethanharz-Dispersion gearbeitet, allerdings mit dem Unterschied, daß das MEK gegen Isopropoxypropanol durch Vakuumdestillation ausgetauscht wurde. Mit Isopropoxypropanol wurde ein Festkörper der Lösung von 64,9 % eingestellt. Das Produkt weist einen pH-Wert von 7,4 und eine Viskosität bei 23 °C von 3.9 dPas (10 : 3 in N-Methylpyrrolidon) auf.

### 3. Herstellung einer Dispersion eines nicht mit Monoisocyanat modifizierten Polyurethanharzes (PV1)

In einem für Polyadditionsreaktionen geeigneten Stahlreaktor wurden 488,4 g meta-Tetramethylxylylendiisocyanat, 134,1 g Dimethylolpropionsäure und 568,0 g Methylethylketon eingewogen und auf 80° C aufgeheizt. Bei einem konstanten Isocyanatgehalt von 7,4 % bezogen, auf die eingesetzte Mischung, kühlte man auf 50° C ab und gab 2110 g der obenbeschriebenen Polyesterlösung (D1) zu. Anschließend wurde auf 80° C aufgeheizt. Bei einem Isocyanatgehalt < 0,1 % und einer Viskosität von 3,6 dPas (10,3 in N-Methylpyrolidon) wurde mit 71,2 g N,N-Dimethylethanolamin neutralisiert. Danach wird mit Wasser verdünnt und das organische Lösemittel unter Vakuum entfernt. Abschließend wurde ein Festkörper von 43% mit deionisiertem Wasser eingestellt. Der pH-Wert der Dispersion betrug 6,8. Die Dispersion war stippenfrei, homogen und mindestens 8 Wochen bei 50° C lagerstabil. Der DMEA-Gehalt betrug 1,42 %, der Lösemittelgehalt 0,5%. Das Polyurethanharz wies eine OH-Zahl von 98 mgKOH/g, eine Säurezahl von 26 mgKOH/g und ein zahlenmittleres Molekulargewicht von 1713, gemessen gegen Polystyrolstandard und bezogen auf Festharz, auf.

### 4. Herstellung einer Dispersion eines Acrylatharzes

In einem 41-Stahlkessel, ausgestattet mit zwei Monomerzuläufen, Initiatorzulauf, Rührer und Rückflußkühler, werden 470 Gew.-Teile n-Butanol als Lösemittelkomponente (B2) (Wasserlöslichkeit WL: 9,0, Verdunstungszahl VDZ: 33, Siedepunkt SDP: 118 Grad C) vorgelegt und auf 110 Grad C aufgeheizt. Dann wird eine Lösung von 36 Gew.-Teilen tert.-Butylperoxyethylhexanoat in 92,4 Gew.-Teilen n-Butanol (B2) in einer solchen Geschwindigkeit zugegeben, daß die Zugabe nach 5,5 Stunden abgeschlossen ist. Mit Beginn der Zugabe der tert-Butylperoxyethylhexanoat-Lösung wird auch mit der Zugabe der Mischung aus (a1) bis (a6) :
(a1): 240 Gew.-Teilen n-Butylmethacrylat,
   209 Gew.-Teilen Methylmethacrylat,
   120 Gew.-Teilen Laurylmethacrylat (Methacryl ester 13 der Firma Röhm GmbH),
(a2): 270 Gew.-Teilen Hydroxyethylmethacrylat und
(a6) : 180 Gew.-Teilen Styrol,
begonnen. Die Mischung aus (a1), (a2) und (a6) wird in einer solchen Geschwindigkeit zugegeben, daß die Zugabe nach 5 Stunden abgeschlossen ist. 3,5 Stunden nach Beginn des ersten Monomerenzulaufs wird ein zweiter Monomerenzulauf gestartet, der gemeinsam mit dem ersten Monomerenzulauf beendet wird und aus einer Mischung der Monomerkomponenten (a2) und (a5) besteht:
(a2) : 120 Gew.-Teile Hydroxyethylmethacrylat und
(a5) : 61 Gew.-Teile Acrylsäure.

Nach Abschluß der Zugabe der tert.-Butylperoxyethylhexanoatlösung wird die Reaktionsmischung noch 2 h bei 120 Grad C gehalten. Dann wird die Harzlösung auf 80 Grad C abgekühlt und innerhalb von etwa 30 Minuten mit 63 Gew.-Teilen Dimethylethanolamin in 1379 Gew.-Teilen bis zu einem Neutralisationsgrad von 85 % neutralisiert. Anschließend wird das Lösemittel (B) n-Butanol durch azeotrope Destillation entfernt, bis höchstens 1 Gew.-% (B), bezogen auf die Dispersion, gaschromatographisch nachweisbar sind.

Nach Beendigung der Destillation wird die Dispersion durch die Zugabe von deionisiertem Wasser auf folgende Endkennzahlen eingestellt:
Säurezahl des Gesamtfestkörpers: 37,2 mg KOH/g,
Feststoffgehalt (1 Stunde, 130 Grad C): 38,3 %,
pH-Wert: 7,40.
Gehalt an Dimethylethanolamin: 2,11 %
Gehalt an Lösemittel: 0,52 %
Das so hergestellte Acrylatharz wies ein zahlenmittleres Molekulargewicht von 7772 Dalton und ein gewichtsmittleres Molekulargewicht von 26651, gemessen gegen Polystyrolstandard, eine OH-Zahl von ca. 140 mgKOH/g und eine Säurezahl von 37,2 mgKOH/g auf, jeweils bezogen auf Festharz.

### 5. Herstellung der Beschichtungsmittel der Beispiele 1 und 2 und des Vergleichsbeispiels 1

Aus den in der Tabelle 1 angegebenen Komponenten werden die Beschichtungsmittel hergestellt, indem zunächst die obenbeschriebene Polyurethan-Dispersion (P1) und die obenbeschriebene Acrylat-Dispersion mittels 10 minütigem Rühren mit einem Laborrührer (500 Umdrehungen/min) vorgemischt werden. Ferner wird aus den in Tabelle 1 angegebenen Additiven durch Rühren mit einem Laborrührer eine Additivlösung hergestellt. Diese Additivlösung wird in die Vormischung der Polyurethan- und der Acrylat-Dispersion mittels 10 minütigem Rühren mit einem Laborrührer (500 Umdrehungen/min) eingearbeitet. Dann wird deionisiertes Wasser mittels 10 minütigem Rühren mit einem Laborrührer (500 Umdrehungen/min) eingearbeitet. Der so erhaltene wäßrige Stammlack hat einen Festkörpergehalt von 33 %.

Zur Herstellung des Klarlackes wird die Lösung des Isocyanates durch 5minütiges Rühren mit einem Laborrührer (500 Umdrehungen/min) in den wäßrigen Stammlack eingearbeitet. Abschließend wird mit deionisiertem Wasser auf die in Tabelle 1 angegebene Viskosität eingestellt.

### 6. Applikation der Beschichtungsmittel und Prüfergebnisse der resultierenden Beschichtungen

Die so hergestellten Beschichtungsmittel werden auf PP-Tafeln pneumatisch appliziert (Trockenfilmschichtdicke 30 -35 Mikrometer). Die so beschichteten Tafeln werden 10 min bei Raumtemperatur abgelüftet und dann 45 min bei 90 °C eingebrannt. Dann werden sie 8 Tage bei 22 °C und 50 % relativer Luftfeuchte gealtert. Danach werden die freien Klarlackfilme verschiedenen Prüfungen unterzogen. Die Prüfergebnisse der Beschichtungen sind in der Tabelle 2 zusammengefaßt.

Ferner werden die so hergestellten Beschichtungsmittel auf Stahlbleche, die zunächst mit einem handelsüblichen Füller auf Polyurethan-Basis (Handelsprodukt Füller FC 60-7415 der Firma BASF Lacke + Farben AG, Münster) und anschließend mit einem handelsüblichen wäßrigen Basislack auf Polyurethan-Basis (Handelsprodukt FV 95-9416 der Firma BASF Lacke + Farben AG, Münster) beschichtet wurden, pneumatisch appliziert (Trockenfilmschichtdicke 30 -35 Mikrometer). Die so beschichteten Tafeln werden 10 min bei Raumtemperatur abgelüftet und dann 45 min bei 90 °C eingebrannt. Dann werden sie 8 Tage bei 22 °C und 50 % relativer Luftfeuchte gealtert. Danach werden die freien Klarlackfilme verschiedenen Prüfungen unterzogen. Die Prüfergebnisse der Beschichtungen sind in der Tabelle 2 zusammengefaßt.

### Zusammenfassung der Prüfergebnisse

Das Beispiel 1 zeigt, daß durch Verwendung eines mit einem Monoisocyanat modifizierten Polyurethanharzes als weiteres Bindemittel Klarlacke mit einem guten Appearance (Haze-Werte) und einer guten Benetzung auf wäßrigem Basislack (Randwinkel) erhalten werden und daß die resultierenden Beschichtungen sich ferner durch einen guten Glanz auszeichnen. Darüber hinaus weisen die Bindemittel-Komponenten (I) des Beispiels eine gute Lagerstabilität von mindestens einem halben Jahr bei 23 °C bzw. mindestens 8 Wochen bei 40 °C auf.

**Tabelle 1:**

| Zusammensetzung der Beschichtungsmittel des Beispiels 1 und des Vergleichsbeispiels 1 | | |
|---|---|---|
| | Beisp. 1 | Vergl. 1 |
| PUR-Dispersion (P1)¹⁾ | 14,160 | - |
| PUR-Lösung (P1)²⁾ | - | - |
| PUR-Dispersion (VP1)³⁾ | - | 18,19 |
| PAC-Dispersion⁴⁾ | 64,370 | 64,370 |
| Isopropoxypropanol⁵⁾ | 1,634 | 1,440 |
| Butoxypropanol⁶⁾ | 3,267 | 2,880 |
| Butylglykolacetat⁷⁾ | 4,899 | 4,310 |
| Emulgator⁸⁾ | 0,652 | 0,652 |
| Polysil.-Polyether⁹⁾ | 0,938 | 0,938 |
| Dimethylpolysiloxan¹⁰⁾ | 0,078 | 0,078 |
| Heptamethyltrisil.¹¹⁾ | 0,78 | 0,078 |
| Benzotriazol¹²⁾ | 0,155 | 0,155 |
| HALS¹³⁾ | 0,271 | 0,271 |
| Verdicker¹⁴⁾ | - | 1,955 |
| Wasser¹⁵⁾ | 9,498 | 4,683 |
| Summe | 100,00 | 100,00 |
| FK(BM) gesamt¹⁶⁾ | 33,32 % | 33,52 % |
| HDI¹⁷⁾ | 20,80 | 20,17 |
| EEP¹⁸⁾ | 5,20 | 5,04 |
| Wasserzugabe¹⁹⁾ | 20,50 | 22,00 |
| pH-Wert (Anfall)²⁰⁾ | 7,3 | 7,2 |

| | | |
|---|---|---|
| Erläuterungen zu Tabelle 1: 1) : unter 1. beschriebene Polyurethan-Dispersion (P1) | | |
| 2): unter 2. beschriebene Polyurethan-Lösung (P1) | | |
| 3): unter 3. beschriebene Polyurethan-Dispersion (VP1) | | |
| 4) : unter 4. beschriebene Polyacrylat-Dispersion | | |
| 5) : (1(2)-Isopropoxypropanol-2 (1)) | | |
| 6) : (1(2)Butoxypropanol-2 (1)) | | |
| 7): (2-Butoxyethyl)acetat | | |
| 8): handelsüblicher Emulgator auf Basis Octylphenolpolyglykolether | | |
| 9) : handelsübliches polyethermodifiziertes Dimethyloligosiloxan | | |
| 10) : handelsübliches polyethermodifiziertes Dimethylpolysiloxan | | |
| 11) : handelsübliches Benetzungsmittel auf Basis eines Heptamethyltrisiloxans | | |
| 12): handelsübliches Lichtschutzmittel auf Basis Benztriazol | | |
| 13) : handelsübliches Lichtschutzmittel auf Basis eines sterisch gehinderten Amins (HALS) | | |
| 14) : 10%-ige Lösung in Wasser eines handelsüblichen Verdickungsmittels auf Basis Dialkylpolyglykolether | | |
| 15) : zur Viskositätseinstellung des Stammlackes zugesetztes Wasser | | |
| 16): Festkörpergehalt aller Bindemittel | | |
| 17): handelsübliches Polyisocyanat (80%ig in Ethylethoxypropionat) auf Basis Hexamethylendiisocyanat mit einem NCO Gehalt von 20% | | |
| 18) : Ethoxyethylpropionat | | |
| 19) : zur Viskositätseinstellung zugesetztes Wasser | | |

**Tabelle 2:**

| Prüfergebnisse | | | |
|---|---|---|---|
| | | Beis.1 | Vgl.1 |
| Viskosität¹⁾ | (mPa.s) | 152 | 355 |
| Randwinkel²⁾ | | 52,9 | 58,6 |
| Appearance | Glanz 20 °³⁾ | 87 | 83 |
| | Haze 20 °⁴⁾ | 12 | 21 |
| | Glas. Stamml.⁵⁾ | i.O. | i.O. |
| | Glas. A1⁶⁾ | i.O. | i.O. |

| | | | |
|---|---|---|---|
| Erläuterungen zu Tabelle 2: 1) : Viskosität des Klarlackes bei 23 °C in mPa.s nach Einstellung auf eine Auslaufzeit von 30 s im DIN4-Becher, gemessen bei einer Scherrate von 10 s⁻¹ | | | |
| 2) : gemessen mit Hilfe eines handelsüblichen Randwinkelmeßgerätes der Firma Krüss an den oben unter Punkt 7 beschriebenen Stahltafeln, die mit Füller, wäßrigem Basislack und mit den Klarlacken beschichtet sind | | | |
| 3) : Glanz bei 20 °, gemessen mit Hilfe des Haze-Gloss Gerätes der Firma Byk-Gardner an den oben unter Punkt 7 beschriebenen Stahltafeln | | | |
| 4) : Haze bei 20 °, gemessen mit Hilfe des Haze-Gloss Gerätes der Firma Byk-Gardner an den oben unter Punkt 7 beschriebenen Stahltafeln | | | |
| 5) : Appearance eines Glasaufzugs des Stammlacks, visuell beurteilt | | | |
| 6): Appearance eines Glasaufzugs der Komponente A1, visuell beurteilt | | | |

## Patentansprüche

1. Polyurethanharz (P), das erhältlich ist, indem
(A) in einer ersten Reaktionsstufe (A)
(a) ein oder mehrere Di- und/oder Polyisocyanate,
(b) ein oder mehrere Verbindungen (b), die mindestens eine die Wasserdispergierbarkeit gewährleistende Gruppe und mehr als 1 gegenüber Isocyanatgruppen reaktive Gruppe aufweisen, und
(c) ggf. ein oder mehrere Verbindungen mit mindestens 2 und maximal 3 OH-Gruppen
zu einem Zwischenprodukt (A) mit freien Isocyanatgruppen und mit Urethangruppen umgesetzt werden,
(B) in einer zweiten Reaktionsstufe (B) das in Stufe (A) erhaltene Zwischenprodukt (A) mit (d) einem oder mehreren Monoisocyanaten versetzt wird und
(C) anschließend das erhaltene Gemisch (B) mit einem oder mehreren hydroxylgruppenhaltigen Polymeren (D) zu dem Polyurethanharz (P) umgesetzt wird, wobei zur Herstellung des Polyurethanharzes weniger als 20 Gew.-%, bezogen auf das Gewicht des Polyurethanharzes (Festkörper), Polyalkylenoxiddi- und/oder Polyalkylenoxidpolyole eingesetzt werden.

2. Polyurethanharz nach Anspruch 1, **dadurch gekennzeichnet, daß** es erhältlich ist, indem in der Reaktionsstufe (C) hydroxylgruppenhaltige Polymere (D) mit einer OH-Zahl von 100 bis 1800 mgKOH/g und/oder mit einem zahlenmittleren Molekulargewicht von 500 bis 3000 und/oder einem Verzweigungsgrad von 2 bis 4 eingesetzt werden.

3. Polyurethanharz nach Anspruch 1 oder 2, **dadurch gekennzeichnet, daß** es erhältlich ist, indem in der Reaktionsstufe (C) als hydroxylgruppenhaltige Polymere (D) hydroxylgruppenhaltige Polyester, Alkydharze, Polyether, Polyacrylatharze, Polyharnstoffharze, Polyurethanharze und/oder Polycarbonatharze eingesetzt werden.

4. Polyurethanharz nach einem der Ansprüche 1 bis 3, **dadurch gekennzeichnet, daß** es erhältlich ist, indem in der Reaktionsstufe (C) als hydroxylgruppenhaltige Polymere (D) Polykondensationsprodukte aus
(k1) 10 bis 45 Mol-% eines oder mehrerer Diole,
(k2) 5 bis 50 Mol-% eines oder mehrerer Polyole mit mindestens 3 OH-Gruppen,
(k3) 35 bis 47 Mol-% einer oder mehrerer Dicarbonsäuren und
(k4) 0 bis 20 Mol-% eines oder mehrerer Monoole
eingesetzt werden, wobei die Summe der Mol-%-Angaben der Komponenten (k1) bis (k4) jeweils 100 Mol-% ergibt und wobei das Polykondensationsprodukt bevorzugt dadurch erhältlich ist, daß die Komponenten (k1) bis (k4) solange einer Polykondensationsreaktion unterworfen werden, bis das Reaktionsprodukt (D) eine Säurezahl von 1 bis 10 mgKOH/g aufweist.

5. Polyurethanharz nach einem der Ansprüche 1 bis 4, **dadurch gekennzeichnet, daß**
als Komponente (a) aliphatische und/oder cycloaliphatische Di- und Polyisocyanate, bevorzugt Isocyanate auf Basis Hexamethylendiisocyanat, Isophorondiisocynat, Isocyanatopropylcyclohexylisocyanat und/oder 4,4-Dicyclohexylmethandiyldiisocyanat und/oder
als Komponente (b) Di- und/oder Polyhydroxycarbonsäuren und/oder
als Komponente (d) aliphatische und/oder cycloaliphatische Monoisocyanate, bevorzugt Stearylisocyanat,
eingesetzt werden.

6. Polyurethanharz nach einem der Ansprüche 1 bis 5, **dadurch gekennzeichnet, daß** die Mengenverhältnisse der Komponenten (a), (b) und (c) in der ersten Reaktionsstufe (A) so gewählt werden, daß das Äquivalentverhältnis von NCO-Gruppen der Verbindung (a) zu den OH-Gruppen der Verbindungen (b) und (c) zwischen 4,0 : 1,0 und > 1,0 : 1,0 liegt und/oder die Mengenverhältnisse der Komponenten (A) und (d) in der zweiten Reaktionsstufe (B) so gewählt werden, daß das Verhältnis der Isocyanatgruppen des Monoisocyanates (d) zu den Urethangruppen der Komponente (A) zwischen 1 : 1 und 0,5 : 1 liegt und/oder daß in der dritten Reaktionsstufe (C) die Mengenverhältnisse der Komponenten (B) und (D) so gewählt werden, daß das Polyurethanharz (P) im wesentlichen keine freien Isocyanatgruppen mehr aufweist.

7. Polyurethanharz nach einem der Ansprüche 1 bis 6, **dadurch gekennzeichnet, daß** das Polyurethanharz (P) eine Säurezahl von 20 bis 40 mgKOH/g, bevorzugt von 25 bis 35 mgKOH/g, und/oder eine OH-Zahl von 60 bis 300 mgKOH/g, bevorzugt von 80 bis 200 mgKOH/g, und/oder ein zahlenmittleres Molekulargewicht von 1000 bis 10000, bevorzugt von 1500 bis 5000, aufweist.

8. Verfahren zur Herstellung der Polyurethanharze nach einem der Ansprüche 1 bis 7, **dadurch gekennzeichnet, daß**
in einer ersten Reaktionsstufe (A)
(a) ein oder mehrere Di- und/oder Polyisocyanate,
(b) ein oder mehrere Verbindungen (b), die mindestens eine die Wasserdispergierbarkeit gewährleistende Gruppe und mehr als 1 gegenüber Isocyanatgruppen reaktive Gruppe aufweisen, und
(c) ggf. ein oder mehrere Verbindungen mit mindestens 2 und maximal 3 OH-Gruppen
zu einem Zwischenprodukt (A) mit freien Isocyanatgruppen und mit Urethangruppen umgesetzt werden,
in einer zweiten Reaktionsstufe (B) das in Stufe (A) erhaltene Zwischenprodukt (A) mit
(d) einem oder mehreren Monoisocyanaten versetzt wird und
anschließend das erhaltene Gemisch (B) mit einem oder mehreren hydroxylgruppenhaltigen Polymeren (D) zu dem Polyurethanharz (P) umgesetzt wird.

9. Wäßriges Beschichtungsmittel, **dadurch gekennzeichnet, daß** es ein Polyurethanharz (P) nach einem der Ansprüche 1 bis 7 enthält.

10. Wäßriges Beschichtungsmittel nach Anspruch 9, **dadurch gekennzeichnet, daß** es 5 bis 14 Gew. -%, bezogen auf das Gesamtgewicht des Beschichtungsmittels und bezogen auf den Festkörper des Polyurethanharzes, des Polyurethanharzes (P) enthält.

11. Beschichtungsmittel nach Anspruch 9 oder 10, **dadurch gekennzeichnet, daß** es ein Zweikomponenten-Polyurethan-Beschichtungsmittel ist und eine Komponente (I) und eine Komponente (II) enthält, wobei
I) die Komponente (I)
(I-1) ein oder mehrere Polyurethanharze (P) nach einem der Ansprüche 1 bis 7,
(I-2) ein oder mehrere wasserlösliche oder wasserdispergierbare, Hydroxylgruppen und Säuregruppen, die in die entsprechenden Säureaniongruppen überführbar sind, enthaltende Acrylatcopolymerisate und/oder acrylierte Polyester und/oder acrylierte Polyurethane mit einer OH-Zahl von 40 bis 200 mgKOH/g und einer Säurezahl von 5 bis 150 mgKOH/g und
(I-3) ggf. ein oder mehrere weitere Polymere enthält, und
II) die Komponente (II) eine Polyisocyanat-komponente als Vernetzungsmittel enthält,
wobei die Komponenten (I-1) bis (I-3) und das Vernetzungsmittel in solchen Mengen eingesetzt werden, daß das Äquivalentverhältnis von Hydroxylgruppen der Komponenten (I-1) bis (I-3) zu den Isocyanatgruppen des Vernetzungsmittels zwischen 1 : 2 und 2 : 1, bevorzugt zwischen 1 : 1, 2 und 1 : 1,5, liegt.

12. Verwendung des Polyurethanharzes nach einem der Ansprüche 1 bis 7 in Beschichtungsmitteln, insbesondere wäßrigen Zweikomponenten-Polyurethan-Beschichtungsmitteln, zur Steuerung der Rheologie und ggf. der optischen Eigenschaften.

13. Verwendung der Beschichtungsmittel nach einem der Ansprüche 9 bis 11 zur als Decklack oder als KlarLack, insbesondere zur Beschichtung von Kunststoffen.

## Claims

1. Polyurethane resin (P) obtainable by
(A) in a first reaction stage (A) reacting
(a) one or more di- and/or polyisocyanates,
(b) one or more compounds (b) which have at least one group which ensures dispersibility in water and more than one group which is reactive towards isocyanate groups, and
(c) if desired, one or more compounds having at least 2 and not more than 3 OH groups
to give an intermediate (A) having free isocyanate groups and having urethane groups,
(B) in a second reaction stage (B) adding
(d) one or more monoisocyanates to the intermediate (A) obtained in stage (A), and
(C) subsequently reacting the resulting mixture (B) with one or more hydroxyl-containing polymers (D) to give the polyurethane resin (P), using less than 20% by weight, based on the weight of the polyurethane resin (solids content), of polyalkylene oxide diols and/or polyalkylene oxide polyols to prepare the polyurethane resin.

2. Polyurethane resin according to Claim 1, **characterized in that** it is obtainable by using in reaction stage (C) hydroxyl-containing polymers (D) having an OH number of from 100 to 1800 mg KOG/g and/or having a number-average molecular weight of from 500 to 3000 and/or a degree of branching of from 2 to 4.

3. Polyurethane resin according to Claim 1 or 2, **characterized in that** it is obtainable by using in reaction stage (C) as hydroxyl-containing polymers (D) hydroxyl-containing polyesters, alkyd resins, polyethers, polyacrylate resins, polyurea resins, polyurethane resins, and/or polycarbonate resins.

4. Polyurethane resin according to any of Claims 1 to 3, **characterized in that** it is obtainable by using in reaction stage (C) as hydroxyl-containing polymers (D) polycondensation products formed from
(k1) from 10 to 45 mol% of at least one diol,
(k2) from 5 to 50 mol% of at least one polyol having at least 3 OH groups,
(k3) from 35 to 47 mol% of at least one dicarboxylic acid and
(k4) from 0 to 20 mol% of at least one monool,
the sum of the molar % of components (k1) to (k4) being in each case 100 mol% and the condensation product being obtainable preferably by subjecting components (k1) to (k4) to a polycondensation reaction until the reaction product (D) has an acid number of from 1 to 10 mg KOH/g.

5. Polyurethane resin according to any of Claims 1 to 4, **characterized in that**
component (a) comprises aliphatic and/or cycloaliphatic di- and polyisocyanates, preferably isocyanates based on hexamethylene diisocyanate, isophorone diisocyanate, isocyanatopropylcyclohexyl isocyanate and/or 4,4'-dicyclohexylmethanediyl diisocyanate
and/or
component (b) comprises di- and/or polyhydroxycarboxylic acids and/or
component (d) comprises aliphatic and/or cycloaliphatic monoisocyanates, preferably stearyl isocyanate.

6. Polyurethane resin according to any of Claims 1 to 5, **characterized in that** the proportions of the components (a), (b) and (c) in the first reaction stage (A) are chosen such that the ratio of equivalents of NCO groups of compound (a) to the OH groups of compounds (b) and (c) is between 4.0:1.0 and > 1.0:1.0 and/or the proportions of components (A) and (d) in the second reaction stage (B) are chosen such that the ratio of isocyanate groups of the monoisocyanate (d) to the urethane groups of component (A) is between 1:1 and 0.5:1 and/or wherein in the third reaction stage (C) the proportions of components (B) and (D) are chosen such that the polyurethane resin (P) essentially no longer contains any free isocyanate groups.

7. Polyurethane resin according to any of Claims 1 to 6, **characterized in that** said polyurethane resin (P) has an acid number of from 20 to 40 mg KOH/g, preferably from 25 to 35 mg KOH/g, and/or an OH number of from 60 to 300 mg KOH/g, preferably from 80 to 200 mg KOH/g, and/or a number-average molecular weight of from 1000 to 10,000, preferably from 1500 to 5000.

8. Process for preparing the polyurethane resins according to any of Claims 1 to 7, **characterized in that**
in a first reaction stage (A)
(a) one or more di- and/or polyisocyanates,
(b) one or more compounds (b) which have at least one group which ensures dispersibility in water and more than one group which is reactive towards isocyanate groups, and
(c) if desired, one or more compounds having at least 2 and not more than 3 OH groups
are reacted to give an intermediate (A) having free isocyanate groups and having urethane groups,
in a second reaction stage (B)
(d) one or more monoisocyanates
are added to the intermediate (A) obtained in stage (A), and
subsequently the resulting mixture (B) is reacted with one or more hydroxyl-containing polymers (D) to give the polyurethane resin (P).

9. Aqueous coating composition, **characterized in that** it comprises a polyurethane resin (P) according to any of Claims 1 to 7.

10. Aqueous coating composition according to Claim 9, **characterized in that** it contains from 5 to 14% by weight of the polyurethane resin (P), based on the overall weight of the coating composition and based on the solids content of the polyurethane resin.

11. Coating composition according to Claim 9 9 or 10, **characterized in that** it is a two-component polyurethane coating composition and comprises a component (I) and a component (II), said
I) component (I) comprising
(I-1) one or more polyurethane resins (P) according to any of Claims 1 to 7,
(I-2) one or more water-soluble or water-dispersible acrylate copolymers containing hydroxyl groups and acid groups which can be converted to the corresponding acid anion groups, and/or acrylated polyesters and/or acrylated polyurethanes, having an OH number of from 40 to 200 mg KOH/g and an acid number of from 5 to 150 mg KOH/g, and
(I-3) if desired, one or more further polymers, and
II) component (II) comprising a polyisocyanate component as crosslinking agent,
said components (I-1) to (I-3) and said crosslinking agent being used in amounts such that the ratio of equivalents of hydroxyl groups of components (I-1) to (1-3) to the isocyanate groups of the crosslinking agent is between 1:2 and 2:1, preferably between 1:1.2 and 1:1.5.

12. Use of the polyurethane resin according to any of Claims 1 to 7 in coating compositions, especially aqueous two-component polyurethane coating compositions, for controlling the rheology and, if appropriate, the optical properties.

13. Use of the coating compositions according to any of Claims 9 to 11 as a topcoat or clearcoat, in particular for coating plastics.

## Revendications

1. Résine polyuréthanne (P), pouvant être obtenue
(A) en faisant réagir dans une première étape de réaction (A)
(a) un ou plusieurs di- et/ou polyisocyanates,
(b) un ou plusieurs composés (b) qui comportent au moins un groupe conférant la dispersibilité dans l'eau et plus de 1 groupe réactif vis-à-vis de groupes isocyanate, et
(c) éventuellement un ou plusieurs composés comportant au moins 2 et au maximum 3 groupes OH
pour aboutir à un produit intermédiaire (A) à groupes isocyanate libres et à groupes uréthanne,
(B) en ajoutant, dans une deuxième étape de réaction (B), (d) un ou plusieurs mono-isocyanates au produit intermédiaire (A) obtenu dans l'étape (A) et
(C) en faisant ensuite réagir le mélange (B) obtenu avec un ou plusieurs polymères (D) contenant des groupes hydroxy, pour aboutir à la résine polyuréthanne (P), en utilisant pour la préparation de la résine polyuréthanne moins de 20 % en poids, par rapport au poids de la résine polyuréthanne (corps solide), de polyoxyalkylènediols et/ou polyoxyalkylènepolyols.

2. Résine polyuréthanne selon la revendication 1, **caractérisée en ce qu'**elle peut être obtenue en utilisant dans l'étape de réaction (C) des polymères (D) contenant des groupes hydroxy, ayant un indice de groupes OH de 100 à 1 800 mg de KOH/g et/ou ayant une masse moléculaire moyenne en nombre de 500 à 3 000 et/ou un degré de ramification de 2 à 4.

3. Résine polyuréthanne selon la revendication 1 ou 2, **caractérisée en ce qu'**elle peut être obtenue en utilisant comme polymères (D) contenant des groupes hydroxy dans l'étape de réaction (C) des polyesters, résines alkyde, polyéthers, résines polyacrylate, résines polyurée, résines polyuréthanne et/ou résines polycarbonate, contenant des groupes hydroxy.

4. Résine polyuréthanne selon l'une quelconque des revendications 1 à 3, **caractérisée en ce qu'**elle peut être obtenue en utilisant comme polymères (D) contenant des groupes hydroxy dans l'étape de réaction (C) des produits de polycondensation obtenus à partir de
(k1) 10 à 45 % en moles d'un ou plusieurs diols,
(k2) 5 à 50 % en moles d'un ou plusieurs polyols comportant au moins 3 groupes OH,
(k3) 35 à 47 % en moles d'un ou plusieurs acides dicarboxyliques et
(k4) 0 à 20 % en moles d'un ou plusieurs monoalcools,
la somme des pourcentages en moles des composants (k1) à (k4) donnant chaque fois 100 % en moles et le produit de polycondensation pouvant être obtenu de préférence par le fait que les composants (k1) à (k4) sont soumis à une réaction de polycondensation jusqu'à ce que le produit de réaction (D) présente un indice d'acide de 1 à 10 mg de KOH/g.

5. Résine polyuréthanne selon l'une quelconque des revendications 1 à 4, **caractérisée en ce qu'**on utilise
comme composant (a) des di- et polyisocyanates aliphatiques et/ou cycloaliphatiques, de préférence des isocyanates à base d'hexaméthylène-diisocyanate, d 'isophorone-diisocyanate, d'isocyanatopropylcyclohexylisocyanate et/ou de 4,4-dicyclohexylméthanediyldiisocyanate et/ou
comme composant (b) des acides di- et/ou polyhydroxycarboxyliques et/ou
comme composant (d) des mono-isocyanates aliphatiques et/ou cycloaliphatiques, de préférence l'isocyanate de stéaryle.

6. Résine polyuréthanne selon l'une quelconque des revendications 1 à 5, **caractérisée en ce que** dans la première étape de réaction (A) les proportions des composants (a), (b) et (c) sont choisies de manière à ce que le rapport d'équivalents des groupes NCO du composé (a) aux groupes NCO des composés (b) et (c) soit compris entre 4,0:1,0 et > 1,0:1,0 et/ou dans la deuxième étape de réaction (B) les proportions des composants (A) et (d) sont choisies de manière à ce que le rapport des groupes isocyanate du mono-isocyanate (d) aux groupes uréthanne du composant (A) soit compris entre 1:1 et 0,5:1 et/ou en ce que dans la troisième étape de réaction (C) les proportions des composants (B) et (D) sont choisies de manière à ce que la résine polyuréthanne (P) ne comporte pratiquement plus de groupes isocyanate libres.

7. Résine polyuréthanne selon l'une quelconque des revendications 1 à 6, **caractérisée en ce que** la résine polyuréthanne (P) présente un indice d'acide de 20 à 40 mg de KOH/g, de préférence de 25 à 35 mg de KOH/g, et/ou un indice d'acide de 60 à 300 mg de KOH/g, de préférence de 80 à 200 mg de KOH/g, et/ou une masse moléculaire moyenne en nombre de 1 000 à 10 000, de préférence de 1 500 à 5 000.

8. Procédé pour la préparation des résines polyuréthanne selon l'une quelconque des revendications 1 à 7, **caractérisé en ce que**
dans une première étape de réaction (A) on fait réagir
(a) un ou plusieurs di- et/ou polyisocyanates,
(b) un ou plusieurs composés (b) qui comportent au moins un groupe conférant la dispersibilité dans l'eau et plus de 1 groupe réactif vis-à-vis de groupes isocyanate, et
(c) éventuellement un ou plusieurs composés comportant au moins 2 et au maximum 3 groupes OH pour aboutir à un produit intermédiaire (A) à groupes isocyanate libres et à groupes uréthanne, dans une deuxième étape de réaction (B) on ajoute
(d) un ou plusieurs mono-isocyanates au produit intermédiaire (A) obtenu dans l'étape (A) et
on fait ensuite réagir le mélange (B) obtenu avec un ou plusieurs polymères (D) contenant des groupes hydroxy, pour aboutir à la résine polyuréthanne (P).

9. Produit aqueux de revêtement, **caractérisé en ce qu'**il contient une résine polyuréthanne (P) selon l'une quelconque des revendications 1 à 7.

10. Produit aqueux de revêtement selon la revendication 9, **caractérisé en ce qu'**il contient de 5 à 14 % en poids, par rapport au poids total du produit de revêtement et par rapport à la matière solide de la résine polyuréthanne, de la résine polyuréthanne (P).

11. Produit aqueux de revêtement selon la revendication 9 ou 10, **caractérisé en ce qu'**il est un produit de revêtement polyuréthanne à deux composants et contient un composant (I) et un composant (II),
I) le composant (I) contenant
(I-1) une ou plusieurs résines polyuréthanne (P) selon l'une quelconque des revendications 1 à 7,
(I-2) un ou plusieurs copolymères d'acrylate et/ou polyesters acrylés et/ou polyuréthannes acrylés, hydrosolubles ou dispersables dans l'eau, contenant des groupes hydroxy et des groupes acides qui peuvent être convertis en les groupes anioniques acides correspondants, et ayant un indice de groupes OH de 40 à 200 mg de KOH/g et un indice d'acide de 5 à 150 mg de KOH/g, et
(I-3) éventuellement un ou plusieurs autres polymères, et
II) le composant (II) contenant un composant polyisocyanate en tant qu'agent de réticulation,
les composants (I-1) à (I-3) et l'agent de réticulation étant utilisés en quantités telles que le rapport d'équivalents des groupes hydroxy des composants (I-1) à (I-3) aux groupes isocyanate de l'agent de réticulation est compris entre 1:2 et 2:1, de préférence entre 1:1, 2 et 1:1,5.

12. Utilisation de la résine polyuréthanne selon l'une quelconque des revendications 1 à 7 dans des produits de revêtement, en particulier des produits aqueux de revêtement à deux composants, pour l'ajustement de la rhéologie et éventuellement des propriétés optiques.

13. Utilisation des produits de revêtement selon l'une quelconque des revendications 9 à 11, en tant que vernis de finition ou en tant que vernis, notamment pour le revêtement de matières plastiques.
